(19) Europäisches Patentamt
European Patent Office
Office européen des brevets

(11) **EP 3 516 786 B1**

(12) **FASCICULE DE BREVET EUROPEEN**

(45) Date de publication et mention
de la délivrance du brevet:
**17.02.2021 Bulletin 2021/07**

(21) Numéro de dépôt: **17769106.0**

(22) Date de dépôt: **26.09.2017**

(51) Int Cl.:
*H04B 7/06* $^{(2006.01)}$      *H04B 7/08* $^{(2006.01)}$
*H04B 7/26* $^{(2006.01)}$      *H01Q 1/12* $^{(2006.01)}$
*H01Q 3/24* $^{(2006.01)}$      *G01S 3/38* $^{(2006.01)}$

(86) Numéro de dépôt international:
**PCT/EP2017/074284**

(87) Numéro de publication internationale:
**WO 2018/055179 (29.03.2018 Gazette 2018/13)**

(54) **PROCÉDÉ DE SÉLECTION D'UNE ANTENNE**

VERFAHREN ZUR AUSWAHL EINER ANTENNE

METHOD FOR SELECTING AN ANTENNA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.09.2016 FR 1601402**

(43) Date de publication de la demande:
**31.07.2019 Bulletin 2019/31**

(73) Titulaire: **Safran Electronics & Defense
92100 Boulogne-Billancourt (FR)**

(72) Inventeur: **TODESCHINI, Eric
92100 Boulogne Billancourt (FR)**

(74) Mandataire: **Cabinet Le Guen Maillet
3, impasse de la Vigie
CS 71840
35418 Saint-Malo Cedex (FR)**

(56) Documents cités:
**EP-A1- 0 702 462     FR-A1- 2 983 015**

## Description

L'invention concerne un procédé de sélection d'une antenne, un système et des dispositifs mettant en œuvre le procédé.

La préservation des êtres humains est devenue une préoccupation majeure dans bien des domaines. C'est ainsi que dans beaucoup de missions périlleuses, les êtres humains sont remplacés par des dispositifs mobiles sans pilotes. On peut citer par exemple certaines missions d'observation sur des zones dangereuses telles que des zones de conflit, des chantiers en hauteur, ou des sites nucléaires assurées par des dispositifs aéroportés sans pilote appelés drones, des dispositifs roulants, flottants ou submersibles.

Bien que certains dispositifs mobiles sans pilotes soient entièrement automatiques, beaucoup de ces dispositifs sont commandés à distance par un ou plusieurs êtres humains à partir d'une station de commande. Ces dispositifs mobiles sans pilotes doivent généralement transmettre des résultats d'observations soit à une personne qui les commande, soit à une personne chargée d'analyser des données issues de ces observations. Ces données comprennent fréquemment des images et parfois des vidéos. Il est alors nécessaire d'établir des communications sans fils entre les dispositifs mobiles sans pilote et la station de commande pour assurer un contrôle à distance desdits dispositifs et une transmission des données d'observation. De telles communications doivent être le plus fiable possible afin, d'une part, qu'une perte de contrôle n'entraîne pas la perte d'un dispositif mobile sans pilote pouvant avoir un coût très élevé, et d'autre part, pour que les données d'observation soient le plus exploitables possible.

Afin de fiabiliser les communications entre la station de commande et un dispositif mobile sans pilote, la station de commande et ledit dispositif mobile peuvent être équipés d'une pluralité d'antennes. Afin d'augmenter le gain et la portée de ces antennes, il est courant d'utiliser des antennes directionnelles couvrant chacune un secteur prédéfini au voisinage de la pluralité d'antennes. L'ensemble des secteurs prédéfinis forme une zone de portée autour de la pluralité d'antennes. Lorsque le dispositif mobile sans pilote est un drone, la zone de portée d'une station de commande peut par exemple prendre la forme d'une demi-sphère autour de la pluralité d'antennes de la station de commande, alors que la zone de portée du drone peut prendre la forme d'une sphère autour de la pluralité d'antennes du drone.

Par définition, un dispositif mobile sans pilote se déplace autour de la station de commande. Par conséquent, ledit dispositif mobile passe successivement d'un secteur prédéfini à un autre. Chaque antenne de la pluralité d'antennes adressant un secteur prédéfini, il est nécessaire de déterminer quelles antennes utiliser pour établir la meilleure communication possible entre la station de commande et ledit dispositif mobile.

Le document EP0702462A1 divulgue un procédé de sélection d'une antenne dans un système comprenant un premier dispositif et un deuxième dispositif mobile.

Il est souhaitable d'utiliser une méthode de sélection d'une antenne suffisamment réactive pour qu'il n'y ait aucune rupture de communication entre la station de commande et le dispositif mobile sans pilote lors d'un passage d'un secteur prédéterminé à un autre.

Il est par ailleurs souhaitable de proposer une méthode qui soit simple à mettre en œuvre et à faible coût.

Selon un premier aspect de la présente invention, la présente invention concerne un procédé de sélection d'une antenne dans un système comprenant un premier dispositif et au moins un second dispositif mobile, le système formant un réseau de communication dans lequel le premier dispositif communique avec chaque second dispositif en utilisant une technique d'accès au médium de type accès multiple à répartition dans le temps dans laquelle chaque communication se fait dans des trames, chaque trame étant divisée en une pluralité d'intervalles temporels comprenant un premier intervalle permettant au premier dispositif d'émettre un premier signal désignant un second dispositif et permettant à chaque second dispositif de se synchroniser temporellement sur une référence temporelle du premier dispositif, et un deuxième intervalle permettant au second dispositif désigné par le premier signal d'émettre un deuxième signal en réponse au premier signal pour acquitter sa présence dans le système, au moins le premier dispositif comprenant une pluralité d'antennes couvrant chacune un secteur prédéfini au voisinage de ladite pluralité. Les trames utilisées dans ledit système sont organisées en une succession de groupes de trames consécutives, chaque groupe de trames étant organisé suivant une structure de groupe associant chaque trame à un couple formé d'une antenne du premier dispositif et d'un second dispositif, chaque couple possible étant associé à une trame différente du groupe de trames en fonction d'une position de ladite trame dans ledit groupe, une information représentative de la structure de groupe étant partagée entre le premier et chaque second dispositif. Le procédé comprend pour chaque dispositif du système comprenant une pluralité d'antennes : obtenir, à partir du premier ou du deuxième signal transmis dans chaque trame d'un groupe de trames, une information représentative d'une qualité de communication entre une antenne dudit dispositif et une antenne du premier ou d'un second dispositifs; et, sélectionner, à partir de l'ensemble des informations représentatives d'une qualité de communication obtenues, l'antenne de sa pluralité d'antennes offrant une qualité de communication la plus élevée avec une antenne du premier ou d'un second dispositif.

Le premier dispositif et chaque second dispositif sait à tout moment quelle antenne utiliser pour obtenir les meilleures performances de communication. Par ailleurs, l'organisation des trames en groupe de trames et le partage de l'information représentative de la structure de groupe de trames entre les différents dispositifs du système permet d'éviter d'avoir à signaler dans les signaux échangés dans le système, les antennes du premier dispositif et les seconds dispositifs auxquels se rapportent une trame.

Selon un mode de réalisation, chaque antenne sélectionnée par un dispositif est conservée par ledit dispositif pendant un nombre de trames prédéterminé suivant ladite sélection, la sélection étant remise à jour après ledit nombre de trames.

De cette manière, la réactivité de la mise à jour des antennes sélectionnées est contrôlée.

Selon un mode de réalisation, le premier dispositif obtient, pour chaque antenne de sa pluralité d'antennes, à partir du deuxième signal transmis dans chaque trame d'un groupe de trames, une information représentative d'une qualité de communication entre ladite antenne et une antenne d'un second dispositif concerné par ladite trame; et, sélectionne, pour chaque second dispositif, à partir de chaque information représentative d'une qualité de communication entre une antenne du premier dispositif et une antenne dudit second dispositif, l'antenne de sa pluralité d'antennes offrant une qualité de communication entre le premier et ledit second dispositif la plus élevée.

Selon un mode de réalisation, chaque second dispositif comprenant une pluralité d'antennes obtient à partir du premier signal transmis dans chaque trame d'un groupe de trames, une information représentative d'une qualité de communication entre une antenne du premier dispositif et une antenne dudit second dispositif; et, sélectionne à partir de chaque information représentative d'une qualité de communication entre une antenne du premier dispositif et une antenne dudit second dispositif, l'antenne de sa pluralité d'antennes offrant une qualité de communication entre le premier et ledit second dispositif la plus élevée.

Ainsi, chaque second dispositif peut utiliser un premier signal qui ne le désigne pas pour sélectionner une antenne.

Selon un deuxième aspect de l'invention, l'invention concerne un système comprenant un premier dispositif et au moins un second dispositif, chaque second dispositif étant mobile, le système formant un réseau de communication dans lequel le premier dispositif communique avec chaque second dispositif en utilisant une technique d'accès au médium de type accès multiple à répartition dans le temps dans laquelle chaque communication se fait dans des trames, chaque trame étant divisée en une pluralité d'intervalles temporels comprenant un premier intervalle permettant au premier dispositif d'émettre un premier signal désignant un second dispositif et permettant à chaque second dispositif de se synchroniser temporellement sur une référence temporelle du premier dispositif, et un deuxième intervalle permettant au second dispositif désigné par le premier signal d'émettre un deuxième signal en réponse au premier signal pour acquitter sa présence dans le système, au moins le premier dispositif comprenant une pluralité d'antennes couvrant chacune un secteur prédéfini au voisinage de ladite pluralité. Les trames utilisées dans ledit système sont organisées en une succession de groupes de trames consécutives, chaque groupe de trames étant organisé suivant une structure de groupe associant chaque trame à un couple formée d'une antenne du premier dispositif et d'un second dispositif, chaque couple possible étant associé à une trame différente du groupe de trames en fonction d'une position de ladite trame dans ledit groupe, une information représentative de la structure de groupe étant partagée entre le premier et chaque second dispositif. Chaque dispositif du système comprenant une pluralité d'antennes comprenant : des moyens d'obtention pour obtenir, à partir du premier ou du deuxième signal transmis dans chaque trame d'un groupe de trames, une information représentative d'une qualité de communication entre une antenne dudit dispositif et une antenne du premier ou d'un second dispositif; et, des moyens de sélection pour sélectionner, à partir de l'ensemble des informations représentatives d'une qualité de communication obtenue, l'antenne de sa pluralité d'antennes offrant une qualité de communication la plus élevée avec une antenne du premier ou d'un second dispositif.

Selon un troisième aspect de l'invention, l'invention concerne un programme d'ordinateur, caractérisé en ce qu'il comprend des instructions pour mettre en œuvre, par un dispositif, le procédé selon le premier aspect, lorsque ledit programme est exécuté par un processeur dudit dispositif.

Selon un quatrième aspect de l'invention, l'invention concerne des moyens de stockage, caractérisés en ce qu'ils stockent un programme d'ordinateur comprenant des instructions pour mettre en œuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système selon l'invention ;
- la Fig. 2 illustre schématiquement une zone de portée autour d'un système antennaire d'une station de commande ;
- la Fig. 3 illustre schématiquement une zone de portée autour d'un système antennaire d'un drone ;
- la Fig. 4A illustre schématiquement un module de traitement compris dans une station de commande;
- la Fig. 4B illustre schématiquement un module de traitement compris dans un drone;
- la Fig. 5 illustre schématiquement une organisation de trames selon l'invention;
- la Fig. 6 illustre schématiquement un procédé de sélection d'une antenne selon l'invention mis en œuvre par une station de commande ; et,

- la Fig. 7 illustre schématiquement un procédé de sélection d'une antenne selon l'invention mis œuvre par un drone.

L'invention est décrite par la suite dans un contexte de système comprenant une station de commande et de un à quatre drones. La station de commande et chaque drone possèdent un système antennaire comprenant une pluralité d'antennes adressant chacune un secteur prédéfini. L'invention s'applique toutefois dans d'autres contextes, par exemple dans un système comprenant une station de commande comprenant une pluralité de systèmes antennaires ayant chacun des zones de portées connexes, un drone pouvant passer d'une zone de portée à une autre. Par ailleurs, le nombre de drones peut être supérieur à quatre. De plus, l'invention pourrait tout aussi bien s'appliquer à d'autres dispositifs mobiles sans pilotes tels que des dispositifs roulants, flottants ou submersibles.

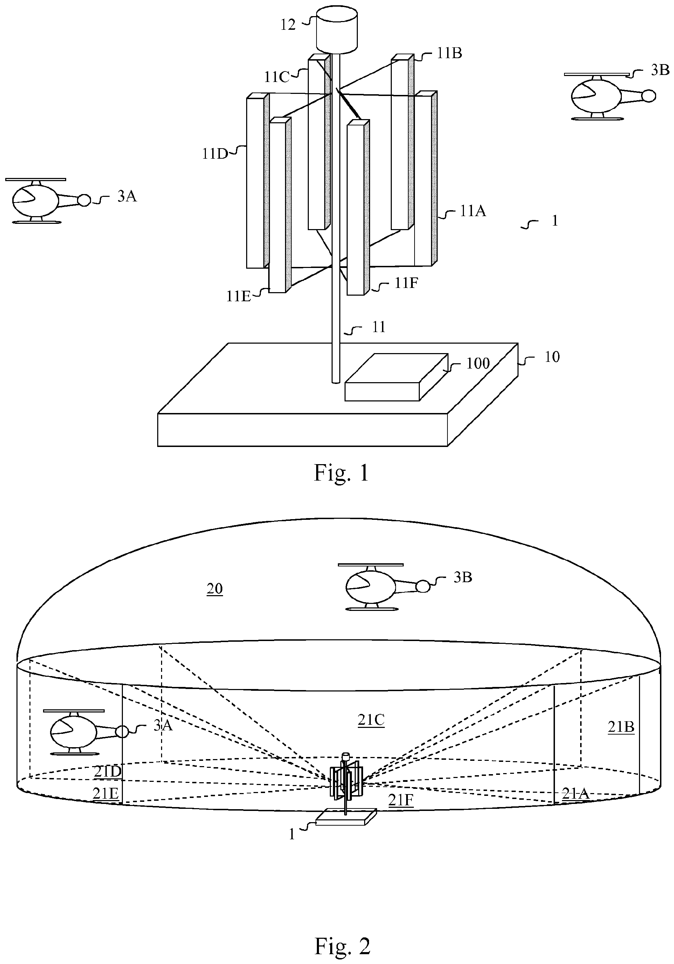

La **Fig. 1** illustre schématiquement un exemple de système selon l'invention.

Dans l'exemple de la Fig. 1, un système 1 comprend une station de commande 10 permettant de contrôler simultanément des drones 3A et 3B.

La station de commande 10 comprend un système antennaire 11 comprenant une pluralité d'antennes. La station de commande 10 comprend un module de traitement 100 apte à mettre en œuvre le procédé selon l'invention. La pluralité d'antennes comprend « 6 » antennes sectorielles 11A, 11B, 11C, 11D, 11E et 11F et une antenne omnidirectionnelle 12. Chaque antenne sectorielle permet de couvrir à « - 3dB » un azimut de « 60° » et une élévation de « +8° ». Les antennes sectorielles disposent chacune d'un gain à « +14dBi ». L'antenne omnidirectionnelle 12 permet de couvrir à « -3dB » un azimut de « 360° » et de « +8° » à « +90° » en élévation avec un gain allant de « +2.5 dBi » à « +6 dBi ». L'antenne omnidirectionnelle 12 sert à faible distance pour des passages de drones au-dessus du système antennaire 11 de la station de commande 10. On note que, outre l'amélioration en termes de gain obtenue grâce à la combinaison d'une antenne omnidirectionnelle avec des antennes sectorielles par rapport à une solution basée uniquement sur des antennes omnidirectionnelles, une utilisation d'antennes sectorielles permet d'être moins sensible aux multi-trajets du fait de la directivité des antennes sectorielles.

Chaque drone (3A ou 3B) comprend un système antennaire (non représenté) comprenant deux antennes omnidirectionnelles (non représentées), une antenne omnidirectionnelle permettant de couvrir à « - 3dB » un azimut de « 360° » et de « 0° » à « +90° » en élévation et une antenne omnidirectionnelle permettant de couvrir à « -3dB » un azimut de « 360° » et de « 0° » à « -90° » en élévation.

On note que, dans l'exemple de système 1 décrit en relation avec la Fig. 1, la station de commande 10 permet de contrôler de « 1 » à « 4 » drones simultanément.

Le système 1 décrit en relation avec la Fig. 1 forme un réseau de communication dans lequel la station de commande 10 communique avec les drones 3A et 3B. La station de commande 10 et les drones 3A et 3B échangent notamment des données de contrôle dans le sens station de commande 10 vers drone (3A ou 3B) et des données d'observation dans le sens drone (3A ou 3B) vers station de commande 10. Dans le système 1, la station de commande 10 et les drones 3A et 3B utilisent une technique d'accès au médium de type accès multiple à répartition dans le temps (TDMA : « Time division multiple access » en terminologie anglo-saxonne) dans laquelle chaque communication de données se fait dans une ou plusieurs trames. Cette technique d'accès au médium nécessite une synchronisation temporelle au niveau de chaque nœud du réseau de communication (*i.e.* au niveau de la station de commande 10 et des drones 3A et 3B) pour éviter tout chevauchement temporel. Le réseau de communication de la Fig. 1 utilise une topologie centralisée dans laquelle la station de commande 10 agit comme un nœud *maître,* c'est-à-dire que la station de commande 10 cadence temporellement l'ensemble du réseau. Les autres nœuds (*i.e.* les drones 3A et 3B) sont *esclaves* du nœud maître et se calent temporellement sur une référence temporelle donnée par le nœud maître.

La **Fig. 2** illustre schématiquement un exemple de zone de portée autour du système antennaire 11 de la station de commande 10.

La zone de portée autour du système antennaire 11 peut être vue schématiquement comme une coupole posée sur un cylindre horizontal ayant pour centre le système antennaire. Cette zone de portée comprend 7 secteurs. Les six antennes sectorielles 11A, 11B, 11C, 11D, 11E et 11F définissent respectivement six secteurs 21A, 21B, 21C, 21D, 21E et 21F. Chacun des 6 secteurs 21A, 21B, 21C, 21D, 21E et 21F possède une forme semi-pyramidale d'azimut « 60° » et de « 8° » d'élévation. Toutes les formes pyramidales partagent un même sommet situé au niveau du système antennaire 11. Les secteurs 21A, 21B, 21C, 21D, 21E et 21F forment un secteur combiné de « 360° » d'azimut et de « 8° » d'élévation inscrit dans le cylindre horizontal. La partie restante de l'ensemble formé par la coupole et le cylindre est le secteur 20 couvert par l'antenne omnidirectionnelle 12.

Dans l'exemple de la Fig. 2, le drone 3A est situé dans le secteur 21D couvert par l'antenne 11D et le drone 3B est situé dans le secteur 20 couvert par l'antenne 12.

On note que la Fig. 2 représente une vision théorique d'un découpage en secteur d'une zone de portée et qu'en réalité la zone de portée d'une antenne est un lobe d'émission ayant une intersection non nulle avec des lobes d'émission d'autres antennes de son voisinage.

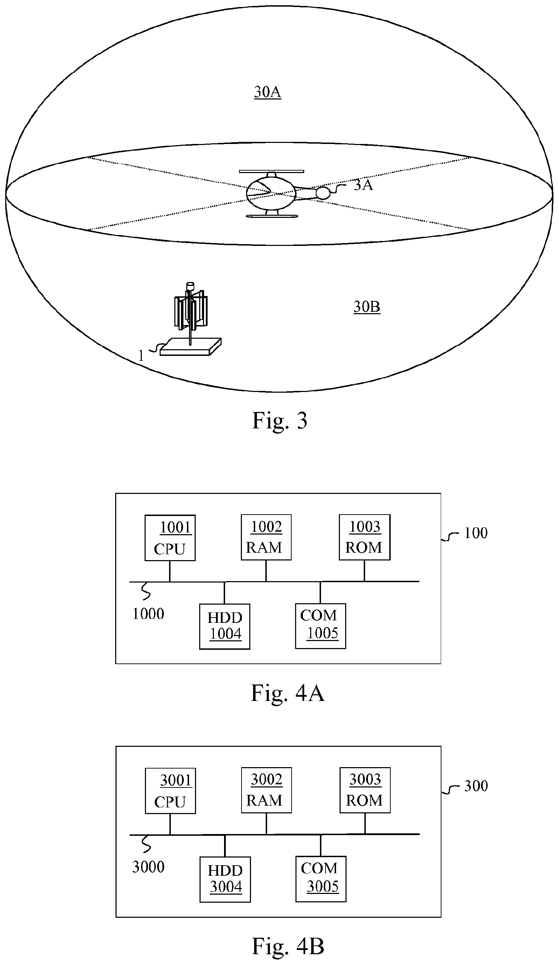

La **Fig. 3** illustre schématiquement une zone de portée autour d'un système antennaire d'un drone.

La zone de portée autour du système antennaire d'un drone peut être représentée par une sphère. Les antennes omnidirectionnelles du système antennaire de chaque drone découpent ladite sphère en deux secteurs semi-hémisphériques (*i.e.* deux demi-sphères) 30A et 30B séparées par un plan horizontal. Dans l'exemple de la Fig. 3, le système antennaire 11 de la station de commande 10 se situe dans le secteur 30B.

La **Fig. 4A** illustre schématiquement un exemple d'architecture matérielle du module de traitement 100 compris dans la station de commande 10.

Selon l'exemple d'architecture matérielle représenté à la Fig. 4A, le module de traitement 100 comprend alors, reliés par un bus de communication 1000 : un processeur ou CPU (« Central Processing Unit » en anglais) 1001 ; une mémoire vive RAM (« Random Access Memory » en anglais) 1002 ; une mémoire morte ROM (« Read Only Memory » en anglais) 1003 ; une unité de stockage telle qu'un disque dur ou un lecteur de support de stockage, tel qu'un lecteur de cartes SD (« Secure Digital » en anglais) 1004 ; au moins une interface de communication 1005 permettant au module de traitement 100 de communiquer avec d'autres modules ou dispositifs. Par exemple l'interface de communication 1005 permet au module de traitement 100 de communiquer avec d'autres modules de la station de commande 10 tels qu'un module de commutation d'antenne permettant de sélectionner une antenne à utiliser à un instant donné ou avec d'autres dispositifs tels les drones 3A et 3B.

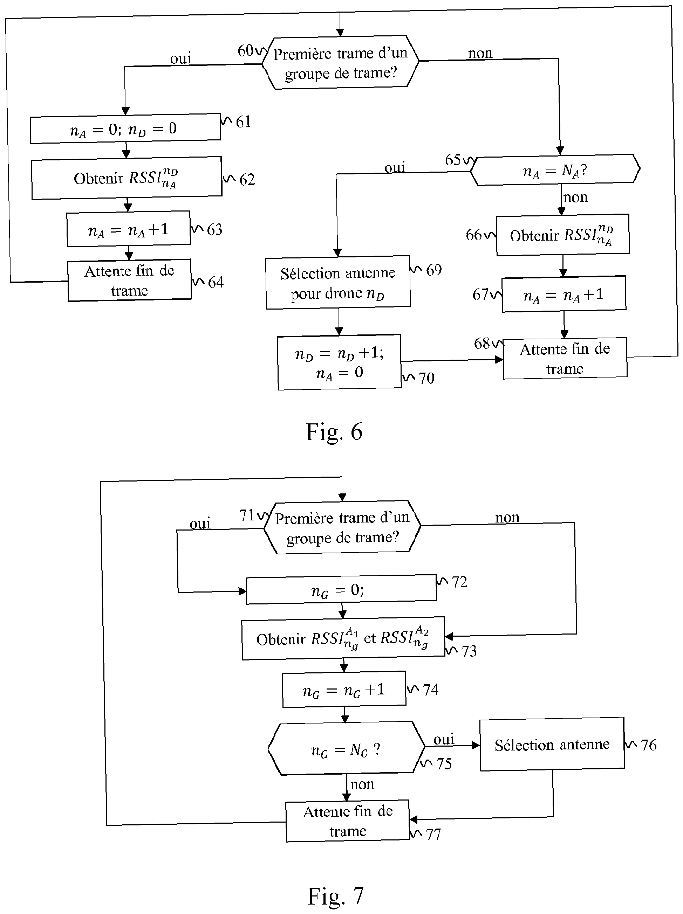

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le module de commande 10 est mis sous tension, le processeur 1001 est capable de lire de la RAM 1002 des instructions et de les exécuter. Dans un mode de réalisation, ces instructions forment un programme d'ordinateur causant la mise en œuvre complète ou partielle, par le processeur 1001, du procédé décrit ci-après en relation avec la Fig. 6.

La **Fig. 4B** illustre schématiquement un exemple d'architecture matérielle d'un module de traitement 300 compris dans un drone tel que le drone 3A ou le drone 3B.

Selon l'exemple d'architecture matérielle représenté à la Fig. 4B, le module de traitement 300 comprend alors, reliés par un bus de communication 3000 : un processeur ou CPU (« Central Processing Unit » en anglais) 3001 ; une mémoire vive RAM (« Random Access Memory » en anglais) 3002 ; une mémoire morte ROM (« Read Only Memory » en anglais) 3003 ; une unité de stockage telle qu'un disque dur ou un lecteur de support de stockage, tel qu'un lecteur de cartes SD (« Secure Digital » en anglais) 3004 ; au moins une interface de communication 3005 permettant au module de traitement 300 de communiquer avec d'autres modules ou dispositifs. Par exemple l'interface de communication 3005 permet au module de traitement 300 de communiquer avec d'autres modules tels qu'un module de commutation d'antenne permettant de sélectionner une antenne à utiliser à un instant donné ou avec la station de commande 10.

Le processeur 3001 est capable d'exécuter des instructions chargées dans la RAM 3002 à partir de la ROM 3003, d'une mémoire externe (non représentée), d'un support de stockage (tel qu'une carte SD), ou d'un réseau de communication. Lorsqu'un drone (3A ou 3B) est mis sous tension, le processeur 3001 est capable de lire de la RAM 3002 des instructions et de les exécuter. Dans un mode de réalisation, ces instructions forment un programme d'ordinateur causant la mise en œuvre complète ou partielle, par le processeur 3001, du procédé décrit ci-après en relation avec les Figs. 7.

Les procédés décrits en relation avec les Figs. 6 et 7 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

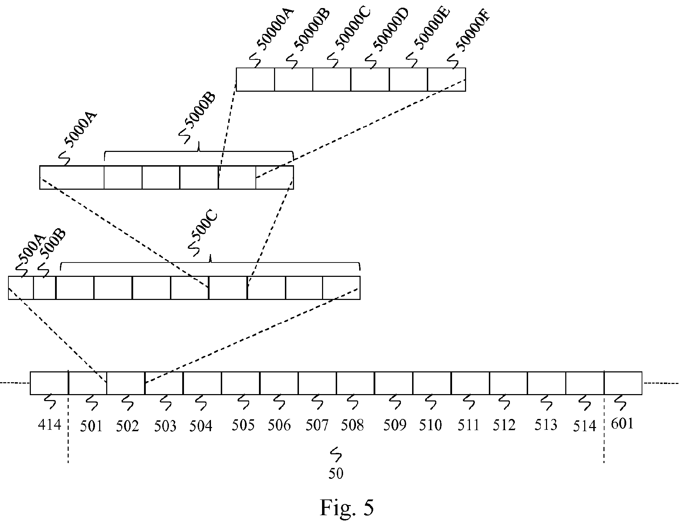

La **Fig. 5** illustre schématiquement une organisation de trames selon l'invention.

Les trames utilisées dans le système 1 sont organisées en une succession de groupes de trames consécutives. Un groupe de trames 50 est représenté en Fig. 5. Le groupe de trames 50 comprend un nombre de trames égal au nombre d'antennes du système antennaire 11 de la station de commande (*i.e.* sept) multiplié par le nombre de drones en activité dans le système 1 (*i.e.* deux). Il y a donc autant de trames dans un groupe de trames que de couples possibles formés d'une antenne du système antennaire 11 et d'un drone. Le groupe de trames 50 comprend donc quatorze trames 501 à 514. Une trame 414 appartient à un groupe de quatorze trames précédent le groupe de trames 50 et une trame 601 appartient à un groupe de quatorze trames suivant le groupe de trames 50.

La Fig. 5 donne un détail de la trame 502 comprise dans le groupe de trames 50, toutes les trames utilisées dans le système 1 ayant une structure de trame identique. La trame 502 est divisée en une pluralité d'intervalles temporels (« timeslot » en terminologie anglo-saxonne). La pluralité d'intervalles temporels comprend un premier intervalle 500A permettant au premier dispositif d'émettre un premier signal appelé *balise* (« beacon » en terminologie anglo-saxonne) permettant à chaque drone de se synchroniser sur une référence temporelle donnée par la station de commande 10. C'est grâce à cette balise que les drones du système 1 peuvent se synchroniser. Par ailleurs, la position de la trame dans le groupe de trames indique à quel drone la balise est destinée. On considère donc que le premier signal désigne un drone parmi les drones du système 1.

La pluralité d'intervalles temporels comprend de plus un deuxième intervalle 500B permettant au drone désigné par le premier signal d'émettre un deuxième signal lui permettant ainsi d'acquitter sa présence dans le système 1.

Les intervalles 500A et 500B sont suivis d'une succession d'intervalles 500C. Chacun des intervalles de la succession d'intervalles 500C permet à un drone prédéterminé d'émettre des données en direction de la station de commande 10 ou de recevoir des données en provenance de la station de commande 10. Chaque drone et la station de commande 10 partagent une information décrivant une allocation des intervalles dans une trame. L'information décrivant l'allocation prend la forme d'une table d'allocation partagée par tous les nœuds du réseau. Cette table d'allocation peut être fixe ou être mise à jour de manière synchrone dans tous les nœuds du réseau pour, par exemple, prendre en compte des arrêts de drones ou des arrivées de nouveaux drones dans le système 1. Ainsi, chaque drone sait dans quel intervalle d'une trame il doit émettre en direction de la station de commande 10 et dans quel intervalle d'une trame il peut recevoir des données en provenance de la station de commande 10. De même, la station de commande 10 sait dans quel intervalle d'une trame elle peut émettre des données en direction d'un drone donné et dans quel intervalle d'une trame elle peut recevoir des données en provenance d'un drone donné. Par exemple, dans la Fig. 5, la succession d'intervalles 500C comprend un premier intervalle utilisé pour communiquer de la station de commande 10 vers le drone 3A, un deuxième intervalle utilisé pour communiquer du drone 3A vers la station de commande 10, un troisième intervalle utilisé pour communiquer de la station de commande 10 vers le drone 3B et un quatrième intervalle utilisé pour communiquer du drone 3B vers la station de commande 10. Les quatre derniers intervalles sont laissés libres par exemple pour deux autres drones éventuels.

La Fig. 5 donne de plus un détail d'un intervalle de la trame 502, chaque intervalle d'une trame ayant une structure identique. Un intervalle d'une trame comprend un sous-intervalle 5000A permettant de prendre en compte des temps de propagation dans le système 1, et un ensemble de sous-intervalles 5000B (appelés « burst » en terminologie anglo-saxonne).

La Fig. 5 donne par ailleurs un détail d'un sous-intervalle (i.e. un « burst ») d'un intervalle d'une trame, chaque sous-intervalle (« burst ») ayant une structure identique. Chaque sous intervalle (« burst ») comprend des périodes 50000A, 50000B et 50000F destinées à prendre en compte des temps de réaction de composants électroniques d'un drone 3A ou 3B ou de la station de commande 10. Une période 50000C (appelée *préambule séquence*) est utilisée pour transmettre une séquence de symboles permettant de réaliser des synchronisations fréquentielles, de phase, de rythme et d'égalisation de signaux de réception. Une période 50000D (appelée *mode sélection*) permet d'indiquer un numéro de sous-intervalle (« burst ») dans une trame pour assurer une synchronisation temporelle de chacun des drones sur la station de commande. Par ailleurs, ce numéro de sous-intervalle (« burst ») permet à chacun des nœuds de déterminer s'il est concerné par ledit sous-intervalle (« burst ») pour émettre ou recevoir des données. Une période 50000E (appelée *bloc de données*) permet de transmettre des données utiles.

Chaque groupe de trames utilisé dans le système 1 est organisé suivant une structure de groupe associant chaque trame à un couple formée d'une antenne de la station de commande 10 et d'un drone, chaque couple possible étant associé à une trame différente en fonction de la position de ladite trame dans le groupe. Par exemple, dans la Fig. 5, les trames 501 à 507 sont associées au drone 3A et les trames 508 à 514 sont associées au drone 3B. La trame 501 est associée à l'antenne 11A, la trame 502 est associée à l'antenne 11B, la trame 503 est associée à l'antenne 11C, la trame 504 est associée à l'antenne 11D, la trame 505 est associée à l'antenne 11E, la trame 506 est associée à l'antenne 11F, et la trame 507 est associée à l'antenne 12. La trame 508 est associée à l'antenne 11A, la trame 509 est associée à l'antenne 11B, la trame 510 est associée à l'antenne 11C, la trame 511 est associée à l'antenne 11D, la trame 512 est associée à l'antenne 11E, la trame 513 est associée à l'antenne 11F, et la trame 514 est associée à l'antenne 12. Ainsi à partir de la position d'une trame dans un groupe de trames, il est possible de déterminer quelle est l'antenne de la station de commande émettrice d'une balise et à quel drone ladite balise est destinée.

La structure de groupe est connue de tous les nœuds du réseau et peut par exemple faire partie des informations contenues dans la table d'allocation. Cette structure de groupe peut être fixe ou évoluer pour prendre en compte des arrêts de drones ou des arrivées de nouveaux drones.

La **Fig. 6** illustre schématiquement un procédé de sélection d'une antenne selon l'invention mis en œuvre par la station de commande 10.

Le procédé décrit en relation avec la Fig. 6 est mis en œuvre par le module de traitement 100 de la station de commande pour chaque groupe de trames. Ce procédé est un procédé synchrone car il suit la cadence des trames du système 1 donnée par la station de commande 10. Pour un groupe de trames, dit groupe de trames courant, le procédé se déroule comme décrit ci-après.

Dans une étape 60, le module de traitement 100 détermine quelle est la position de la trame en cours dans le groupe de trames courant.

Lorsque la trame en cours est la première trame du groupe de trames courant, le module de traitement 100 met en œuvre une étape 61. Au cours de l'étape 61, le module de traitement 100 initialise une variable $n_A$ permettant de comptabiliser un nombre d'antennes du système antennaire 11 examinées et une variable $n_D$ permettant de comptabiliser un nombre de drones en activité dans le système 1 examinés. L'étape 61 est, par exemple, mise en œuvre au début de la première trame du groupe de trames courant. Dans la Fig. 5, l'étape 61 est typiquement mise en œuvre au début de la trame 501.

Dans une étape 62, le module de traitement 100 obtient une information représentative d'une qualité de communication entre une antenne du système antennaire 11 et une antenne du drone concerné par ladite trame. Pour ce faire, le module de traitement 100 connaît la structure de groupe de trames du système 1. Par ailleurs, le module de traitement 100 connaît la position de la trame en cours dans le groupe de trames courant. Connaissant la position de la trame en cours, il peut en déduire le couple formé d'une antenne du système antennaire 11 et d'un drone correspondant à la trame en cours. Par exemple, lorsque la trame en cours est la trame 501, le module de traitement peut déduire que le couple correspondant à cette trame est formé de l'antenne 11A et du drone 3A. L'information représentative d'une qualité de communication entre l'antenne 11A et une antenne du drone 3A est un RSSI (indication de force d'un signal reçu : « Received Signal Strength Indication » en terminologie anglo-saxonne). Ce RSSI est mesuré sur le deuxième signal reçu en provenance du drone 3A dans l'intervalle 500B de la trame 501, en réponse à la balise (*i.e.* premier signal) émise par la station de commande 10 en utilisant l'antenne 11A dans l'intervalle 500A de la trame 501. Dans un mode de réalisation, la valeur de RSSI est fournie par l'interface de communication 1005. Une valeur du RSSI mesuré est sauvegardée par le module de traitement 100 dans une variable $RSSI_{n_A}^{n_D}$ pour le couple correspondant à la trame en cours.

Dans une étape 63, le module de traitement 100 incrémente la variable $n_A$ d'une unité.

Dans une étape 64, le module de traitement 100 se met en attente de la fin de la trame en cours. Lorsque la trame en cours est terminée, le module de traitement 100 retourne à l'étape 60.

Lorsque la trame en cours n'est pas la première trame d'un groupe de trames, l'étape 60 est suivie d'une étape 65. Lors de l'étape 65 le module de traitement 100 compare la variable $n_A$ à un nombre $N_A$ représentant le nombre d'antennes dans le système antennaire 11. Si la variable $n_A$ est inférieure au nombre d'antennes dans le système antennaire 11 $N_A$, l'étape 65 est suivie d'une étape 66.

Au cours de l'étape 66, le module de traitement 100 obtient une valeur de RSSI représentative d'une qualité de communication entre une antenne du système antennaire 11 et une antenne du drone concerné par ladite trame. Une valeur de RSSI est sauvegardée dans une variable $RSSI_{n_A}^{n_D}$ par le module de traitement 100 pour le couple formé d'une antenne du système antennaire 11 et d'un drone correspondant à la trame en cours.

Dans une étape 67, le module de traitement incrémente la variable $n_A$ d'une unité.

Dans une étape 68, le module de traitement 100 se met en attente de la fin de la trame en cours. Lorsque la trame en cours est terminée, le module de traitement 100 retourne à l'étape 60.

Lorsque, lors de l'étape 65, la variable $n_A$ est égale au nombre d'antennes dans le système antennaire 11 $N_A$, le module de traitement 100 met en œuvre une étape 69.

Lors de l'étape 69, le module de traitement 100 sélectionne, à partir de l'ensemble des informations représentatives d'une qualité de communication obtenues, l'antenne de sa pluralité d'antennes offrant une qualité de communication la plus élevée avec une antenne du drone associé à la valeur courante de la variable $n_D$. Par exemple, dans le cas de la Fig. 1, le drone 3A est associé à la valeur « 0 » de la variable $n_D$ (quelle que soit l'antenne du drone utilisée) et le drone 3B est associé à la valeur « 1 » de la variable $n_D$ (quelle que soit l'antenne du drone utilisée). Le module de traitement 100 parcourt les valeurs de RSSI sauvegardées dans les variables $RSSI_{n_A}^{n_D}$ et sélectionne l'antenne correspondant à la valeur de RSSI maximale observée pour le drone associé à la valeur courante de la variable $n_D$.

Dans une étape 70, le module de traitement 100 incrémente la variable $n_D$ d'une unité et réinitialise la variable $n_A$ à « 0 ». Suite à l'étape 70, le module de traitement remet en œuvre l'étape 68 déjà expliquée.

Dans un mode de réalisation, l'antenne du système antennaire 11 sélectionné lors de l'étape 69 est conservée par la station de commande 10 pendant un nombre de trames prédéterminé suivant ladite sélection, la sélection étant remise à jour après ledit nombre de trames. Dans l'exemple de la Fig. 5, l'antenne du système antennaire 11 à utiliser pour communiquer avec le drone 3A est sélectionnée au cours de la trame 507 et conservée pendant les sept trames suivantes (i.e. pendant les trames 508 à 514) du groupe de trames courant. L'antenne du système antennaire 11 à utiliser pour communiquer avec le drone 3B est sélectionnée au cours de la trame 514 et conservée pendant les sept trames suivantes (i.e. pendant les trames 501 à 507) du groupe de trames suivant le groupe de trames courant.

Dans d'autres modes de réalisation, la sélection pourrait être remise à jour avec une fréquence plus faible, par exemple, dans le cadre de la Fig. 5, l'antenne sélectionnée pourrait être conservée pendant « 21 » trames suivant la sélection.

Dans un mode de réalisation, la sélection pourrait être remise à jour avec une fréquence dépendant d'un nombre de drones actifs dans le système 1.

Dans un mode de réalisation, le module de traitement prend en compte le fait qu'un secteur couvert par une antenne est un lobe se chevauchant avec des lobes d'antennes voisines, pour éviter des basculements fréquents d'une antenne du système antennaire 11 à une autre. Pour ce faire, le module de traitement 100 applique un algorithme à hystérésis. Dans cet algorithme, un seuil de basculement entre deux antennes est assujetti à une valeur d'hystérésis prédéterminée en fonction de caractéristiques du système antennaire.

Le procédé décrit en relation avec la Fig. 6 est adapté à la structure de groupe de trames décrite en relation avec la Fig. 5. Les principes de ce procédé restent les mêmes pour d'autres structures de groupes de trames.

Par ailleurs, le procédé décrit en relation avec la Fig. 6 est mis en œuvre par le module de traitement 100 de la station de commande 10. Le module de traitement 300 d'un drone *(i.e.* du drone 3A ou du drone 3B) applique un procédé similaire décrit en relation avec la Fig. 7 suivant les mêmes principes que le procédé décrit en relation avec la Fig. 6.

La **Fig. 7** illustre schématiquement un procédé de sélection d'une antenne selon l'invention mis œuvre par un drone *(i.e.* le drone 3A ou le drone 3B) du système 1.

Le procédé décrit en relation avec la Fig. 7 est mis en œuvre par le module de traitement 300 du drone pour chaque groupe de trames. Ce procédé est un procédé synchrone car il suit la cadence des trames du système 1 donnée par la station de commande 10. Pour un groupe de trames courant, le procédé se déroule comme décrit ci-après.

Dans une étape 71, le module de traitement 300 détermine quelle est la position de la trame en cours dans le groupe de trames courant.

Lorsque la trame en cours est la première trame du groupe de trames courant, le module de traitement 100 met en œuvre une étape 72. Au cours de l'étape 72, le module de traitement 300 initialise une variable $n_G$ permettant de comptabiliser un nombre de trames examinées dans le groupe de trames courant. L'étape 72 est, par exemple, mise en œuvre au début de la première trame du groupe de trames courant. Dans la Fig. 5, l'étape 72 est typiquement mise en œuvre au début de la trame 501.

Dans une étape 73 le module de traitement 300 obtient, pour chaque antenne du système antennaire du drone, une information représentative d'une qualité de communication entre une antenne du système antennaire 11 et ladite antenne du drone. Pour ce faire, le module de traitement 300 obtient pour chaque antenne du système antennaire du drone, une valeur de RSSI mesurée sur la balise (premier signal) transmise dans l'intervalle 500A de la trame courante. Cette valeur de RSSI est par exemple fournie par l'interface de communication 3005 du module de traitement 300. Dans l'exemple de la Fig. 1, le système antennaire de chaque drone comprend deux antennes, une première antenne $A_1$ et une deuxième antenne $A_2$. La valeur de RSSI obtenue pour l'antenne $A_1$ est sauvegardée dans une variable $RSSI_{n_G}^{A_1}$ et la valeur de RSSI obtenue pour l'antenne $A_2$ est sauvegardée dans une variable $RSSI_{n_G}^{A_2}$.

Dans une étape 74, le module de traitement 300 incrémente la variable $n_G$ d'une unité.

Dans une étape 75, le module de traitement 300 compare la valeur de la variable $n_G$ avec un nombre $N_G$ représentant le nombre de trames dans un groupe de trames.

Lorsque la variable $n_G$ est inférieure au nombre de trames dans un groupe de trames $N_G$, le module de traitement 300 se met en attente de la fin de la trame en cours puis retourne ensuite à l'étape 71.

Lorsque la variable $n_G$ est égale au nombre de trames dans un groupe de trames $N_G$, le module de traitement 300 met en œuvre une étape 76. Au cours de l'étape 76, le module de traitement 300 parcourt les variables $RSSI_{n_G}^{A_1}$ et $RSSI_{n_G}^{A_2}$ sauvegardées et sélectionne l'antenne du système antennaire du drone associé à la valeur de RSSI la plus élevée. L'étape 76 est suivie de l'étape 77 déjà expliquée.

Lors de l'étape 71, lorsque la trame en cours n'est pas la première trame d'un groupe de trames, le module de traitement 300 passe directement à l'étape 73 sans passer par l'étape 72.

Dans un mode de réalisation, l'antenne du système du drone sélectionné lors de l'étape 76 est conservée par le drone pendant un nombre de trames prédéterminé suivant ladite sélection, la sélection étant remise à jour après ledit nombre de trames. Dans l'exemple de la Fig. 5, l'antenne du système du drone 3A (respectivement 3B) à utiliser pour communiquer avec la station de commande est sélectionnée au cours de la trame 514 et conservée pendant les quatorze trames suivantes *i.e.* les quatorze trames du groupe de trames suivant le groupe de trames courant. Dans d'autres modes de réalisation, la sélection pourrait être remise à jour avec une fréquence plus faible, par exemple, dans le cadre de la Fig. 5, l'antenne sélectionnée pourrait être conservée pendant « 28 » trames suivant la sélection.

De la même manière que le module de traitement 100 prend en compte le fait que les secteurs couverts par une antenne du système antennaire 11 est un lobe se chevauchant avec des lobes d'antennes voisines, dans un mode de réalisation, le module de traitement 300 prend en compte que le secteur couvert par chaque antenne du système antennaire du drone est un lobe se chevauchant pour éviter des basculements fréquents d'une antenne à une autre. Dans ce mode de réalisation, le module de traitement 300 applique lui aussi un algorithme à hystérésis.

**Revendications**

1. Procédé de sélection d'une antenne dans un système (1) comprenant un premier dispositif (10) et au moins un second dispositif mobile (3A, 3B), le système (1) formant un réseau de communication dans lequel le premier dispositif (10) communique avec chaque second dispositif (3A, 3B) en utilisant une technique d'accès au médium de type accès multiple à répartition dans le temps dans laquelle chaque communication se fait dans des trames, chaque trame étant divisée en une pluralité d'intervalles temporels comprenant un premier intervalle (500A) permettant au premier dispositif (10) d'émettre un premier signal désignant un second dispositif (3A, 3B) et permettant à chaque second dispositif (3A, 3B) de se synchroniser temporellement sur une référence temporelle du premier dispositif (10), et un deuxième intervalle (500B) permettant au second dispositif (3A, 3B) désigné par le premier signal d'émettre un deuxième signal en réponse au premier signal pour acquitter sa présence dans le système (1), au moins le premier dispositif (10) comprenant une pluralité d'antennes (11) couvrant chacune un secteur prédéfini au voisinage de ladite pluralité (11) et chaque second dispositif comprenant une pluralité d'antennes,

les trames utilisées dans ledit système sont organisées en une succession de groupes de trames consécutives (50), chaque groupe de trames (50) étant organisé suivant une structure de groupe associant chaque trame à un couple formé d'une antenne du premier dispositif (10) et d'un second dispositif (3A, 3B), chaque couple possible étant associé à une trame différente du groupe de trames (50) en fonction d'une position de ladite trame dans ledit groupe (50), une information représentative de la structure de groupe étant partagée entre le premier (10) et chaque second dispositif (3A, 3B) ;

le procédé comprend pour chaque dispositif comprenant une pluralité d'antennes (10, 3A, 3B) :

   obtenir (62, 66), à partir du premier ou du deuxième signal transmis dans chaque trame d'un groupe de trames (50), une information représentative d'une qualité de communication entre une antenne dudit dispositif et une antenne du premier (10) ou d'un second dispositif (3A, 3B); et,

   sélectionner (69, 76), à partir de l'ensemble des informations représentatives d'une qualité de communication obtenues, l'antenne de sa pluralité d'antennes offrant une qualité de communication la plus élevée avec une antenne du premier (10) ou d'un second dispositif (3A, 3B).

2. Procédé selon la revendication 1 où chaque antenne sélectionnée par un dispositif est conservée par ledit dispositif pendant un nombre de trames prédéterminé suivant ladite sélection, la sélection étant remise à jour après ledit nombre de trames.

3. Procédé selon la revendication 1 ou 2 où le premier dispositif (10) :

   obtient (62, 66), pour chaque antenne de sa pluralité d'antennes (11), à partir du deuxième signal transmis dans chaque trame d'un groupe de trames (50), une information représentative d'une qualité de communication entre ladite antenne et une antenne d'un second dispositif (3A, 3B) concerné par ladite trame; et,

   sélectionne (69), pour chaque second dispositif, à partir de chaque information représentative d'une qualité de communication entre une antenne du premier dispositif (10) et une antenne dudit second dispositif (3A, 3B), l'antenne de sa pluralité d'antennes (11) offrant une qualité de communication entre le premier (10) et ledit second dispositif (3A, 3B) la plus élevée.

4. Procédé selon la revendication 1, 2 ou 3 où chaque second dispositif (3A, 3B) comprenant une pluralité d'antennes :

   obtient (73) à partir du premier signal transmis dans chaque trame d'un groupe de trames (50), une information représentative d'une qualité de communication entre une antenne du premier dispositif (10) et une antenne dudit second dispositif (3A, 3B); et,

   sélectionne (76) à partir de chaque information représentative d'une qualité de communication entre une antenne du premier dispositif (10) et une antenne dudit second dispositif (3A, 3B), l'antenne de sa pluralité d'antennes offrant une qualité de communication entre le premier (10) et ledit second dispositif (3A, 3B) la plus élevée.

5. Système (1) comprenant un premier dispositif (10) et au moins un second dispositif (3A, 3B), chaque second dispositif (3A, 3B) étant mobile, le système (1) formant un réseau de communication dans lequel le premier dispositif (10) communique avec chaque second dispositif (3A, 3B) en utilisant une technique d'accès au médium de type accès multiple à répartition dans le temps dans laquelle chaque communication se fait dans des trames, chaque trame étant divisée en une pluralité d'intervalles temporels comprenant un premier intervalle (500A) permettant au premier dispositif (10) d'émettre un premier signal désignant un second dispositif (3A, 3B) et permettant à chaque second dispositif (3A, 3B) de se synchroniser temporellement sur une référence temporelle du premier dispositif (10), et un deuxième intervalle (500B) permettant au second dispositif (3A, 3B) désigné par le premier signal d'émettre un deuxième signal en réponse au premier signal pour acquitter sa présence dans le système (1), au moins le premier dispositif (10) comprenant une pluralité d'antennes (11) couvrant chacune un secteur prédéfini au voisinage de ladite pluralité (11) et chaque second dispositif comprenant une pluralité d'antennes,

les trames utilisées dans ledit système (1) sont organisées en une succession de groupes de trames consécutives (50), chaque groupe de trames (50) étant organisé suivant une structure de groupe associant chaque trame à un couple formée d'une antenne du premier dispositif (10) et d'un second dispositif (3A, 3B), chaque couple possible étant associé à une trame différente du groupe de trames (50) en fonction d'une position de ladite trame dans ledit groupe (50), une information représentative de la structure de groupe étant partagée entre le premier (10) et chaque second dispositif (3A, 3B) ;

chaque dispositif comprenant une pluralité d'antennes comprend :

des moyens d'obtention (62, 66, 73) pour obtenir, à partir du premier ou du deuxième signal transmis dans chaque trame d'un groupe de trames (50), une information représentative d'une qualité de communication entre une antenne dudit dispositif et une antenne du premier (10) ou d'un second dispositif (3A, 3B); et,

des moyens de sélection (69, 76) pour sélectionner, à partir de l'ensemble des informations représentatives d'une qualité de communication obtenue, l'antenne de sa pluralité d'antennes offrant une qualité de communication la plus élevée avec une antenne du premier (10) ou d'un second dispositif (3A, 3B).

6. Programme d'ordinateur, **caractérisé en ce qu'**il comprend des instructions pour mettre en œuvre, par un dispositif (100, 300), le procédé selon l'une quelconque des revendications 1 à 4, lorsque ledit programme est exécuté par un processeur dudit dispositif (100, 300).

7. Moyens de stockage, **caractérisés en ce qu'**ils stockent un programme d'ordinateur comprenant des instructions pour mettre en œuvre, par un dispositif (100, 300), le procédé selon l'une quelconque des revendications 1 à 4, lorsque ledit programme est exécuté par un processeur dudit dispositif (100, 300).

**Patentansprüche**

1. Verfahren zur Auswahl einer Antenne in einem System (1) umfassend eine erste Vorrichtung (10) und wenigstens eine zweite, mobile Vorrichtung (3A, 3B), wobei das System (1) ein Kommunikationsnetz bildet, in welchem die erste Vorrichtung (10) mit jeder zweiten Vorrichtung (3A, 3B) kommuniziert, indem sie eine Technik zum Zugriff auf das Medium vom Zeitmultiplextyp nutzt, wobei jede Kommunikation in Rahmen erfolgt, wobei jeder Rahmen in eine Mehrzahl von Zeitintervallen aufgeteilt wird, umfassend ein erstes Intervall (500A), das es der ersten Vorrichtung (10) gestattet, ein erstes Signal abzugeben, das eine zweite Vorrichtung (3A, 3B) designiert und es jeder zweiten Vorrichtung (3A, 3B) gestattet, sich zeitlich mit einer Zeitreferenz der ersten Vorrichtung (10) zu synchronisieren, und ein zweites Intervall (500B), das es der zweiten Vorrichtung (3A, 3B), die vom ersten Signal designiert ist, gestattet, ein zweites Signal als Antwort auf das erste Signal abzugeben, um ihr Vorhandensein im System (1) zu bestätigen, wobei wenigstens die erste Vorrichtung (10) eine Mehrzahl von Antennen (11) umfasst, die jeweils einen vorgegebenen Sektor in der Nähe der Mehrzahl (11) abdeckt, und jede zweite Vorrichtung eine Mehrzahl von Antennen umfasst, wobei die Rahmen, die im System genutzt werden, in einer Aufeinanderfolge von aufeinanderfolgenden Rahmengruppen (50) organisiert sind, wobei jede Rahmengruppe (50) entsprechend einer Gruppenstruktur organisiert ist, die jeden Rahmen einem Paar zuordnet, das von einer Antenne der ersten Vorrichtung (10) und einer zweiten Vorrichtung (3A, 3B) gebildet ist, wobei jedes mögliche Paar einem unterschiedlichen Rahmen der Rahmengruppe (50) je nach einer Position des Rahmens in der Gruppe (50) zugeordnet ist, wobei eine Information, die für die Gruppenstruktur repräsentativ ist, zwischen der ersten (10) und jeder zweiten Vorrichtung (3A, 3B) gemeinsam genutzt wird; wobei das Verfahren für jede Vorrichtung umfassend eine Mehrzahl von Antennen (10, 3A, 3B) Folgendes umfasst:

Beziehen (62, 66), ausgehend vom ersten oder zweiten Signal, das in jedem Rahmen einer Rahmengruppe (50) übertragen wird, einer Information, die für eine Kommunikationsqualität zwischen einer Antenne der Vorrichtung und einer Antenne der ersten (10) oder einer zweiten Vorrichtung (3A, 3B) repräsentativ ist; und,

Auswählen (69, 76), ausgehend von der Menge der bezogenen Informationen, die für eine Kommunikationsqualität repräsentativ sind, der Antenne von ihrer Mehrzahl von Antennen, die eine höchste Kommunikationsqualität mit einer Antenne der ersten (10) oder einer zweiten Vorrichtung (3A, 3B) bietet.

2. Verfahren nach Anspruch 1, wobei jede Antenne, die von einer Vorrichtung auswählt wird, von der Vorrichtung während einer vorbestimmten Anzahl von Rahmen gemäß der Auswahl beibehalten wird, wobei die Auswahl nach der Anzahl von Rahmen wieder aktualisiert wird.

3. Verfahren nach Anspruch 1 oder 2, wobei die erste Vorrichtung (10):

für jede Antenne von ihrer Mehrzahl von Antennen (11) ausgehend vom zweiten Signal, das in jedem Rahmen einer Rahmengruppe (50) übertragen wird, eine Information bezieht (62, 66), die für eine Kommunikationsqualität zwischen der Antenne und einer Antenne einer zweiten Vorrichtung (3A, 3B), die von dem Rahmen betroffen ist, repräsentativ ist; und,
für jede zweite Vorrichtung ausgehend von jeder Information, die für eine Kommunikationsqualität zwischen einer Antenne der ersten Vorrichtung (10) und einer Antenne der zweiten Vorrichtung (3A, 3B) repräsentativ ist, die Antenne von ihrer Mehrzahl von Antennen (11) auswählt (69), die eine höchste Kommunikationsqualität zwischen der ersten (10) und der zweiten Vorrichtung (3A, 3B) bietet.

4. Verfahren nach Anspruch 1, 2 oder 3, wobei jede zweite Vorrichtung (3A, 3B) umfassend eine Mehrzahl von Antennen:

ausgehend vom ersten Signal, das in jedem Rahmen einer Rahmengruppe (50) übertragen wird, eine Information bezieht (73), die für eine Kommunikationsqualität zwischen einer Antenne der ersten Vorrichtung (10) und einer Antenne der zweiten Vorrichtung (3A, 3B) repräsentativ ist; und,
ausgehend von jeder Information, die für eine Kommunikationsqualität zwischen einer Antenne der ersten Vorrichtung (10) und einer Antenne der zweiten Vorrichtung (3A, 3B) repräsentativ ist, die Antenne von ihrer Mehrzahl von Antennen auswählt (76), die eine höchste Kommunikationsqualität zwischen der ersten (10) und der zweiten Vorrichtung (3A, 3B) bietet.

5. System (1) umfassend eine erste Vorrichtung (10) und wenigstens eine zweite Vorrichtung (3A, 3B), wobei jede zweite Vorrichtung (3A, 3B) mobil ist, wobei das System (1) ein Kommunikationsnetz bildet, in welchem die erste Vorrichtung (10) mit jeder zweiten Vorrichtung (3A, 3B) kommuniziert, indem sie eine Technik zum Zugriff auf das Medium vom Zeitmultiplextyp nutzt, wobei jede Kommunikation in Rahmen erfolgt, wobei jeder Rahmen in eine Mehrzahl von Zeitintervallen aufgeteilt wird, umfassend ein erstes Intervall (500A), das es der ersten Vorrichtung (10) gestattet, ein erstes Signal abzugeben, das eine zweite Vorrichtung (3A, 3B) designiert und es jeder zweiten Vorrichtung (3A, 3B) gestattet, sich zeitlich mit einer Zeitreferenz der ersten Vorrichtung (10) zu synchronisieren, und ein zweites Intervall (500B), das es der zweiten Vorrichtung (3A, 3B), die vom ersten Signal designiert ist, gestattet, ein zweites Signal als Antwort auf das erste Signal abzugeben, um ihr Vorhandensein im System (1) zu bestätigen, wobei wenigstens die erste Vorrichtung (10) eine Mehrzahl von Antennen (11) umfasst, die jeweils einen vorgegebenen Sektor in der Nähe der Mehrzahl (11) abdeckt, und jede zweite Vorrichtung eine Mehrzahl von Antennen umfasst, wobei die Rahmen, die im System (1) genutzt werden, in einer Aufeinanderfolge von aufeinanderfolgenden Rahmengruppen (50) organisiert sind, wobei jede Rahmengruppe (50) entsprechend einer Gruppenstruktur organisiert ist, die jeden Rahmen einem Paar zuordnet, das von einer Antenne der ersten Vorrichtung (10) und einer zweiten Vorrichtung (3A, 3B) gebildet ist, wobei jedes mögliche Paar einem unterschiedlichen Rahmen der Rahmengruppe (50) je nach einer Position des Rahmens in der Gruppe (50) zugeordnet ist, wobei eine Information, die für die Gruppenstruktur repräsentativ ist, zwischen der ersten (10) und jeder zweiten Vorrichtung (3A, 3B) gemeinsam genutzt wird;
wobei jede Vorrichtung umfassend eine Mehrzahl von Antennen Folgendes umfasst:

Bezugsmittel (62, 66, 73) zum Beziehen, ausgehend vom ersten oder zweiten Signal, das in jedem Rahmen einer Rahmengruppe (50) übertragen wird, einer Information, die für eine Kommunikationsqualität zwischen einer Antenne der Vorrichtung und einer Antenne der ersten (10) oder einer zweiten Vorrichtung (3A, 3B) repräsentativ ist; und,
Auswahlmittel (69, 76) zum Auswählen, ausgehend von der Menge der Informationen, die für eine bezogene Kommunikationsqualität repräsentativ sind, der Antenne ihrer Mehrzahl von Antennen, die eine höchste Kommunikationsqualität mit einer Antenne der ersten (10) oder einer zweiten Vorrichtung (3A, 3B) bietet.

6. Computerprogramm, **dadurch gekennzeichnet, dass** es Anweisungen umfasst, um durch eine Vorrichtung (100, 300) das Verfahren nach einem der Ansprüche 1 bis 4 durchzuführen, wenn das Programm von einem Prozessor der Vorrichtung (100, 300) ausgeführt wird.

7. Speichermittel, **dadurch gekennzeichnet, dass** sie ein Computerprogramm speichern, das Anweisungen umfasst, um durch eine Vorrichtung (100, 300) das Verfahren nach einem der Ansprüche 1 bis 4 durchzuführen, wenn das Programm von einem Prozessor der Vorrichtung (100, 300) ausgeführt wird.

## Claims

1. Method for selecting an antenna in a system (1) comprising a first device (10) and at least one second, mobile device (3A, 3B), the system (1) forming a communication network in which the first device (10) communicates with each second device (3A, 3B) by using a medium access technique of time-division multiple access type in which each communication is made in frames, each frame being divided into a plurality of time slots comprising a first slot (500A) allowing the first device (10) to transmit a first signal designating a second device (3A, 3B) and allowing each second device (3A, 3B) to temporally synchronize with a time reference of the first device (10), and a second slot (500B) allowing the second device (3A, 3B) designated by the first signal to transmit a second signal in response to the first signal in order to acknowledge its presence in the system (1), at least the first device (10) comprising a plurality of antennas (11) each covering a predefined sector in the vicinity of said plurality (11) and each second device comprising a plurality of antennas,
   the frames used in said system are organized in a succession of groups of consecutive frames (50), each group of frames (50) being organized according to a group structure associating each frame with a pair formed of an antenna of the first device (10) and of a second device (3A, 3B), each possible pair being associated with a different frame from the group of frames (50) depending on the position of said frame in said group (50), a piece of information representative of the group structure being shared between the first (10) and each second device (3A, 3B);
   the method comprises for each device comprising a plurality of antennas (10, 3A, 3B):

   obtaining (62, 66), on the basis of the first or of the second signal transmitted in each frame of a group of frames (50), a piece of information representative of the quality of communication between an antenna of said device and an antenna of the first (10) or of a second device (3A, 3B); and
   selecting (69, 76), on the basis of all of the obtained pieces of information representative of the quality of communication, the antenna from its plurality of antennas that offers the highest quality of communication with an antenna of the first (10) or of a second device (3A, 3B).

2. Method according to Claim 1 wherein each antenna selected by a device is retained by said device for a predefined number of frames following said selection, the selection being updated after said number of frames.

3. Method according to Claim 1 or 2 wherein the first device (10):

   obtains (62, 66), for each antenna of its plurality of antennas (11), on the basis of the second signal transmitted in each frame of a group of frames (50), a piece of information representative of the quality of communication between said antenna and an antenna of a second device (3A, 3B) concerned by said frame; and
   selects (69), for each second device, on the basis of each piece of information representative of the quality of communication between an antenna of the first device (10) and an antenna of said second device (3A, 3B), the antenna of its plurality of antennas (11) that offers the highest quality of communication between the first (10) and said second device (3A, 3B).

4. Method according to Claim 1, 2 or 3 wherein each second device (3A, 3B) comprising a plurality of antennas:

   obtains (73), on the basis of the first signal transmitted in each frame of a group of frames (50), a piece of information representative of the quality of communication between an antenna of the first device (10) and an antenna of said second device (3A, 3B); and
   selects (76), on the basis of each piece of information representative of the quality of communication between an antenna of the first device (10) and an antenna of said second device (3A, 3B), the antenna from its plurality of antennas that offers the highest quality of communication between the first (10) and said second device (3A, 3B).

5. System (1) comprising a first device (10) and at least one second device (3A, 3B), each second device (3A, 3B) being mobile, the system (1) forming a communication network in which the first device (10) communicates with each second device (3A, 3B) by using a medium access technique of time-division multiple access type in which each communication is made in frames, each frame being divided into a plurality of time slots comprising a first slot (500A) allowing the first device (10) to transmit a first signal designating a second device (3A, 3B) and allowing each second device (3A, 3B) to temporally synchronize with a time reference of the first device (10), and a second slot (500B) allowing the second device (3A, 3B) designated by the first signal to transmit a second signal in response to the first signal in order to acknowledge its presence in the system (1), at least the first device (10) comprising a plurality of antennas (11) each covering a predefined sector in the vicinity of said plurality (11) and each second device comprising a plurality of antennas,

the frames used in said system (1) are organized in a succession of groups of consecutive frames (50), each group of frames (50) being organized according to a group structure associating each frame with a pair formed of an antenna of the first device (10) and of a second device (3A, 3B), each possible pair being associated with a different frame from the group of frames (50) depending on the position of said frame in said group (50), a piece of information representative of the group structure being shared between the first (10) and each second device (3A, 3B);
each device comprising a plurality of antennas comprises:

obtaining means (62, 66, 73) for obtaining, on the basis of the first or of the second signal transmitted in each frame of a group of frames (50), a piece of information representative of the quality of communication between an antenna of said device and an antenna of the first (10) or of a second device (3A, 3B); and
selection means (69, 76) for selecting, on the basis of all of the pieces of information representative of the quality of communication obtained, the antenna from its plurality of antennas that offers the highest quality of communication with an antenna of the first (10) or of a second device (3A, 3B).

6. Computer program, **characterized in that** it comprises instructions for implementing, by means of a device (100, 300), the method according to any one of Claims 1 to 4, when said program is executed by a processor of said device (100, 300).

7. Storage means, **characterized in that** they store a computer program comprising instructions for implementing, by means of a device (100, 300), the method according to any one of Claims 1 to 4, when said program is executed by a processor of said device (100, 300).

Fig. 1

Fig. 2

Fig. 3

Fig. 4A

Fig. 4B

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0702462 A1